(19) Europäisches Patentamt
European Patent Office
Office européen des brevets

(11) **EP 4 030 503 A1**

(12) **EUROPEAN PATENT APPLICATION**
published in accordance with Art. 153(4) EPC

(43) Date of publication:
**20.07.2022 Bulletin 2022/29**

(21) Application number: **20862067.4**

(22) Date of filing: **14.09.2020**

(51) International Patent Classification (IPC):
*H01M 4/131* (2010.01)      *H01M 4/485* (2010.01)
*H01M 10/052* (2010.01)      *H01M 10/0562* (2010.01)

(52) Cooperative Patent Classification (CPC):
**H01M 4/131; H01M 4/485; H01M 10/052;**
**H01M 10/0562;** Y02E 60/10

(86) International application number:
**PCT/JP2020/034625**

(87) International publication number:
**WO 2021/049665 (18.03.2021 Gazette 2021/11)**

(84) Designated Contracting States:
**AL AT BE BG CH CY CZ DE DK EE ES FI FR GB**
**GR HR HU IE IS IT LI LT LU LV MC MK MT NL NO**
**PL PT RO RS SE SI SK SM TR**
Designated Extension States:
**BA ME**
Designated Validation States:
**KH MA MD TN**

(30) Priority: **13.09.2019 JP 2019167263**

(71) Applicant: **Mitsui Mining & Smelting Co., Ltd.**
**Shinagawa-ku**
**Tokyo 141-8584 (JP)**

(72) Inventors:
• **MOGI Satoshi**
  **Ageo-shi, Saitama 362-0021 (JP)**
• **Omura Jun**
  **Ageo-shi, Saitama 362-0021 (JP)**

(74) Representative: **Novagraaf Technologies**
**Bâtiment O2**
**2, rue Sarah Bernhardt**
**CS90017**
**92665 Asnières-sur-Seine Cedex (FR)**

(54) **ELECTRODE MIXTURE AND ELECTRODE LAYER AND SOLID-STATE BATTERY EMPLOYING SAME**

(57)    The present invention relates to an electrode mixture in which a titanium niobium composite oxide, which serves as an active material, is used in combination with a solid-state electrolyte, and provides a novel electrode mixture capable of obtaining excellent battery characteristics, especially excellent charge-discharge efficiency when constituting a solid-state battery by using the electrode mixture.

Provided is an electrode mixture that contains: a sulfide solid-state electrolyte containing a lithium (Li) element, a phosphorus (P) element, and a sulfur (S) element; and an active material, wherein the active material is represented by general formula $Ti_{1\pm\alpha}Nb_{2\pm\beta}O_{7\pm\gamma}$ (wherein $0 \leq \alpha < 1$, $0 \leq \beta < 2$, and $0 \leq \gamma < 0.3$), and the active material has a ratio ($D_{50}$ ($\mu$m) / BET ($m^2/g$)) of 0.005 or more and 5.0 or less, the ratio being a ratio of a particle diameter $D_{50}$ at which the volume cumulative particle diameter based on the volume-based particle size distribution obtained by measuring with a laser diffraction scattering-type particle size distribution measurement method is 50% with respect to a BET specific surface area analyzed from the gas absorption isotherm curve on the basis of multimolecular layer adsorption theory.

[FIG. 1]

**Description**

TECHNICAL FIELD

The present invention relates to an electrode mixture that can be suitably used, for example, in solid-state batteries, especially all-solid-state lithium secondary batteries.

BACKGROUND ART

Electrodes used in all-solid-state lithium secondary batteries are generally produced by mixing particles of an active material formed from a material into which lithium ions can be inserted by charging, with a binder, a conductive material, and a solvent; coating the mixture thus obtained on the surface of a current collector; drying the mixture to form a coating film; and further press processing the coating film. Currently, most of the electrodes of batteries commercially available use a carbon material (also referred to as "graphite") as the active material. However, the carbon material used as the electrode active material is not a sufficiently safe material, as accidents of fuming and ignition occur when the electrodes are short-circuited or the battery is deformed. Moreover, the theoretical limit has already been reached in terms of capacity, and the development of new electrode active materials is demanded.

In recent years, metal composite oxides have been studied as an alternative active material to carbon materials, and in particular, titanium oxides have been attracting attention. It has been reported that batteries using titanium oxides as the electrode active material can be charged and discharged stably and rapidly. Among them, a lithium titanium composite oxide $Li[Li_{1/3}Ti_{5/3}]O_4$ (LTO) has been attracting attention as an electrode active material for lithium ion batteries for high reliability applications, since it is a material capable of storing and releasing lithium ions without changing the structure and size of the crystal lattice, and has also been put into practical applications.

However, the LTO electrode has lower capacities per mass and per volume, and also has a higher electrode potential, resulting in a lower battery operating voltage, compared to graphite-based electrodes. Therefore, in order to increase the energy density while ensuring safety, metal composite oxide electrode materials having a higher capacity are required.

A titanium niobium composite oxide, represented by $TiNb_2O_7$, has a high theoretical capacity of approximately twice that of LTO in terms of capacity per mass and per volume, and is attracting attention as a material that can be expected to provide high energy density (charge-discharge capacity).

As to the technology using the titanium niobium composite oxide as the active material, for example, Patent Document 1 discloses a negative electrode material for non-aqueous electrolyte secondary batteries using a titanium niobium composite oxide such as $TiNb_2O_7$ having a BET specific surface area of 0.18 $m^2$/g or more as the active material.

Patent Document 2 discloses an active substance for batteries containing: secondary particles each of which is constructed by agglomerated primary particles of an active material, the primary particles of the active material containing a niobium composite oxide such as a titanium niobium composite oxide, the secondary particles having a compression fracture strength of 10 MPa or more; and a carbon material phase formed on at least a part of the surface of each of the secondary particles.

Patent Document 3 discloses a non-aqueous electrolyte battery using a negative electrode provided with a negative electrode active material layer containing niobium titanium-containing composite oxide particles.

CITATION LIST

PATENT DOCUMENT

Patent Document 1: Japanese Patent Laid-Open No. 2010-287496
Patent Document 2: Japanese Patent Laid-Open No. 2015-088467
Patent Document 3: Japanese Patent Laid-Open No. 2016-219355

SUMMARY OF THE INVENTION

PROBLEM TO BE SOLVED BY THE INVENTION

As described above, the titanium niobium composite oxide has a high theoretical capacity and is a notable material as an active material. However, even if it exhibits excellent battery performance when used with a liquid-based electrolyte, the characteristics when used in combination with a solid-state electrolyte are unknown. The state of the reaction interface is different between the liquid-based electrolyte and the solid-state electrolyte, and thus batteries using the solid-state electrolyte may not only fail to achieve the expected battery characteristics, but may not even function as batteries in the first place.

Accordingly, the present invention relates to an electrode mixture in which a titanium niobium composite oxide, which serves as an active material, is used in combination with a solid-state electrolyte, and provides a novel electrode mixture capable of obtaining excellent battery characteristics, especially excellent charge-discharge efficiency when constituting a solid-state battery by using the electrode mixture.

MEANS FOR SOLVING PROBLEM

The present invention proposes an electrode mixture that contains: a sulfide solid-state electrolyte containing a lithium (Li) element, a phosphorus (P) element, and a sulfur (S) element; and an active material,

wherein the active material is represented by general formula $Ti_{1\pm\alpha}Nb_{2\pm\beta}O_{7\pm\gamma}$ (wherein $0 \leq \alpha < 1$, $0 \leq \beta < 2$, and $0 \leq \gamma < 0.3$), and
the active material has a ratio ($D_{50}$ ($\mu$m) / BET ($m^2$/g)) of 0.005 or more and 5.0 or less, in which the ratio refers to a ratio of a particle diameter $D_{50}$ (also referred to as "$D_{50}$") at which the volume cumulative particle diameter based on the volume-based particle size distribution obtained by measuring with a laser diffraction scattering-type particle size distribution measurement method is 50% with respect to a BET specific surface area (also referred to as "BET specific surface area" or "BET") analyzed from the gas absorption isotherm curve on the basis of multimolecular layer adsorption theory.

EFFECT OF THE INVENTION

The electrode mixture proposed by the present invention can be constituted by using a titanium niobium composite oxide having a ratio of $D_{50}$ to BET specific surface area ($D_{50}$ ($\mu$m) / BET ($m^2$/g)) adjusted to a predetermined range as the active material and using a sulfide solid-state electrolyte containing a lithium (Li) element, a phosphorus (P) element, and a sulfur (S) element as the solid-state electrolyte, thereby obtaining excellent battery characteristics, especially excellent charge-discharge efficiency when constituting a solid-state battery by using the electrode mixture.

BRIEF DESCRIPTION OF DRAWINGS

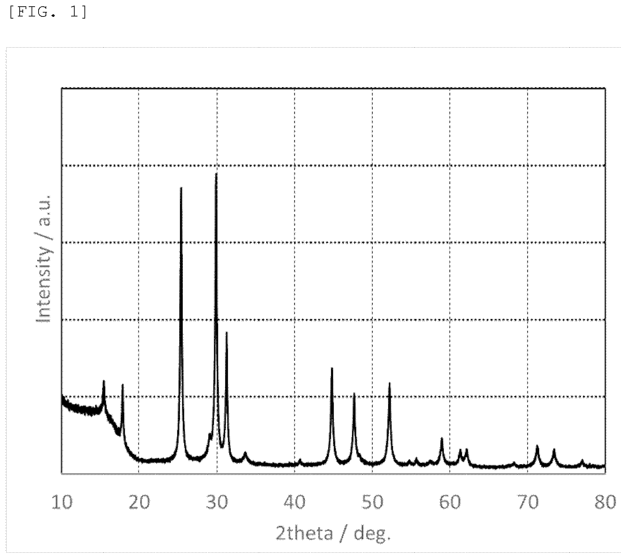

FIG. 1 is a diagram of an X-ray diffraction pattern obtained by measuring a solid-state electrolyte used in Examples 1 to 5 and Comparative Example 1 by an X-ray diffraction method.

MODE(S) FOR CARRYING OUT THE INVENTION

Next, the present invention will be described based on exemplary embodiments. However, the present invention is not limited to the embodiments that will be described below.

<Present Electrode Mixture>

The electrode mixture according to an example of the embodiment of the present invention (referred to as "present electrode mixture") contains an active material composed of a compound represented by general formula $Ti_{1\pm\alpha}Nb_{2\pm\beta}O_{7\pm\gamma}$ (wherein $0 \leq \alpha < 1$, $0 \leq \beta < 2$, and $0 \leq \gamma < 0.3$) (referred to as "present active material") and a sulfide solid-state electrolyte (referred to as "present solid-state electrolyte").

(Present Active Material)

The present active material may be composed of a titanium niobium composite oxide represented by general formula (1): $Ti_{1\pm\alpha}Nb_{2\pm\beta}O_{7\pm\gamma}$ (wherein $0 \leq \alpha < 1$, $0 \leq \beta < 2$, and $0 \leq \gamma < 0.3$). Among others, the present active material is preferably composed of a titanium niobium composite oxide having the same crystal structure as that of $TiNb_2O_7$, that is, a crystal structure of monoclinic $TiNb_2O_7$.

In the general formula (1), the parameter $\alpha$ is preferably 0 or more and less than 1, more preferably 0.3 or less, and even more preferably 0.1 or less.

In the general formula (1), the parameter $\beta$ is preferably 0 or more and less than 2, more preferably 1 or less, and even more preferably 0.5 or less.

In the general formula (1), the parameter $\gamma$ is preferably 0 or more and less than 0.3, more preferably 0.2 or less, and even more preferably 0.1 or less.

In the present active material, a part of the Ti or Nb elements in the general formula (1) may be replaced by B, Na, Mg, Al, Si, S, P, K, Ca, Ba, Mo, W, Sr, Cr, Mn, Fe, Co, Ni, Pb, and the like.

The present active material preferably has a ratio of $D_{50}$ to BET ($D_{50}$ ($\mu$m) / BET ($m^2$/g)) of 0.005 or more and 5.0 or less.

The ratio ($D_{50}$ ($\mu$m) / BET ($m^2$/g)) of the present active material is preferably set to 0.005 or more, since the increase in contact resistance with the present solid-state electrolyte and the decrease in lithium ion conduction (battery performance) can be prevented. Meanwhile, the ratio is preferably set to 5.0 or less, since, even if the particle diameter is large to some extent, the area in contact with the present solid-state electrolyte can be maintained at an appropriate level to ensure lithium ion conduction (battery performance) between the present solid-state electrolyte and the active material.

From such a viewpoint, the ratio ($D_{50}$ ($\mu$m) / BET ($m^2$/g)) of the present active material is more preferably 0.1 or more, and even more preferably 0.2 or more. Meanwhile, it is more preferably 4.0 or less, and even more preferably 3.0 or less.

The present active material preferably has a $D_{50}$ of 0.1 $\mu$m or more and 8.0 $\mu$m or less.

When the $D_{50}$ of the present active material is 0.1 $\mu$m or more, the increase in the number of contact points with the present solid-state electrolyte due to the increase in specific surface area can be suppressed to reduce the increase in contact resistance. Meanwhile, the $D_{50}$ of the present active material is preferably 8.0 $\mu$m or less, since the effects of expansion and contraction can be reduced to secure the contact points with the present solid-state electrolyte.

From such a viewpoint, the $D_{50}$ of the present active material is more preferably 0.5 $\mu$m or more, and even more preferably 1.0 $\mu$m or more. Meanwhile, it is more preferably 5.0 $\mu$m or less, and even more preferably 4.5 $\mu$m or less.

The $D_{50}$ of the present active material can be adjusted by changing the calcining, crushing, and pulverizing conditions. However, the present invention is not limited to these adjustment methods.

Here, the $D_{50}$ means a 50% volume cumulative particle diameter, that is, a diameter at a cumulation of 50% from the finer side in a cumulative percentage representation of particle diameter measurement values in terms of volume in a chart of a volume-based particle size distribution.

The $D_{50}$ of the present active material can be measured by the method described in Examples.

The present active material preferably has a BET specific surface area of 1.0 $m^2$/g or more and 20 $m^2$/g or less.

The BET specific surface area of the present active material is preferably 1.0 $m^2$/g or more, since appropriate surface contact can be maintained in mixing the present active material with the present solid-state electrolyte, to ensure lithium ion conduction (battery performance). Meanwhile, the BET specific surface area of the present active material is preferably 20 $m^2$/g or less, since the contact resistance with the present solid-state electrolyte can be reduced, and the present active material can be prevented from peeling from the solid-state electrolyte during charging and discharging, to prevent the deterioration of lithium ion conduction (battery performance).

From such a viewpoint, the BET specific surface area of the present active material is more preferably 1.1 $m^2$/g or more, and even more preferably 1.2 $m^2$/g or more. Meanwhile, it is more preferably 10 $m^2$/g or less, and even more preferably 5.0 $m^2$/g or less.

The BET specific surface area of the present active material can be adjusted by changing the calcining, crushing, and pulverizing conditions. However, the present invention is not limited to these adjustment methods.

The BET specific surface area of the present active material is a BET specific surface area analyzed from the gas absorption isotherm curve on the basis of multimolecular layer adsorption theory, and can be measured by the method described in Examples.

In the present active material, the relationship among the particle diameter $D_{50}$, a particle diameter $D_{90}$ at which the volume cumulative particle diameter based on the volume-based particle size distribution obtained by measuring with a laser diffraction scattering-type particle size distribution measurement method is 90%, and a particle diameter $D_{10}$ at which the volume cumulative particle diameter is 10% preferably satisfies:

$$(D_{90} \ (\mu m) \ - \ D_{10} \ (\mu m)) \ / \ D_{50} \ (\mu m) \ = \ 0.8 \ to \ 1.5.$$

The relational formula ($D_{90}$ ($\mu$m) - $D_{10}$ ($\mu$m)) / $D_{50}$ ($\mu$m) indicates the degree of variation in the particle diameter. The value of the relational formula is preferably 0.8 or more, since the present active material has a particle diameter distribution with some variation, which makes the surface contact in mixing with the present solid-state electrolyte more uniform and ensures uniform lithium ion conduction (battery performance). Meanwhile, the value of the relational formula is preferably 1.5 or less, since excessive variation in the particle diameter of the present active material can be suppressed, and the surface contact in mixing with the present solid-state electrolyte can be maintained to ensure lithium ion conduction (battery performance).

From such a viewpoint, the value of the relational formula is more preferably 0.9 or more, and even more preferably 1.0 or more. Meanwhile, it is more preferably 1.45 or less, and even more preferably 1.4 or less.

The $D_{90}$ of the present active material is preferably 1.5 $\mu$m or more, and more preferably 2.5 $\mu$m or more. Meanwhile, it is preferably 10 $\mu$m or less, and more preferably 7 $\mu$m or less.

The $D_{10}$ of the present active material is preferably 0.1 $\mu$m or more, and more preferably 0.8 $\mu$m or more. Meanwhile, it is preferably 3 $\mu$m or less, and more preferably 2 $\mu$m or less.

The method for adjusting and measuring the $D_{90}$ and the $D_{10}$ of the present active material is the same as that of the $D_{50}$ described above.

The present active material preferably has a ratio ($D_{50}$ ($\mu$m) / $D_{SEM}$ ($\mu$m)) of the particle diameter $D_{50}$ to an average particle diameter $D_{SEM}$, as calculated by software analysis of particles in a scanning electron microscope image, of 1.0 or more and 3.5 or less.

The $D_{50}$ value can be considered as the average particle diameter of the agglomerated particles regarded as a single particle (agglomerated particle), and is usually smaller as the agglomerated state is smaller and closer to monodisperse. On the other hand, the $D_{SEM}$ is the average particle diameter calculated by imaging the image with an SEM (scanning electron microscope) and extracting a plurality of primary particles from the image, as described later. Therefore, the ratio ($D_{50}$ / $D_{SEM}$) can be regarded as the degree of agglomeration. When there are many agglomerates, the $D_{50}$ becomes a value relatively larger than the $D_{SEM}$, and when the agglomerated state is small, the $D_{50}$ is relatively close to the $D_{SEM}$ and the ratio ($D_{50}$ / $D_{SEM}$) is thus close to 1. Meanwhile, the ratio ($D_{50}$ / $D_{SEM}$) of the present active material is more preferably 3.0 or less, and even more preferably 2.0 or less.

The present active material preferably has a $D_{SEM}$ of 0.1 $\mu$m or more and 3.0 $\mu$m or less.

When the $D_{SEM}$ of the present active material is 3.0 $\mu$m or less, the effects of expansion and contraction can be reduced to secure the contact points with the solid-state electrolyte in the solid-state battery electrode. Meanwhile, when the $D_{SEM}$ thereof is 0.1 $\mu$m or more, the increase in the number of the contact points with the solid electrolyte due to the increase in specific surface area can be suppressed to reduce the increase in contact resistance.

From such a viewpoint, the $D_{SEM}$ of the present active material is more preferably 2.5 $\mu$m or less, and even more preferably 2.2 $\mu$m or less. Meanwhile, it is more preferably 1.0 $\mu$m or more, and even more preferably 1.4 $\mu$m or more.

The $D_{SEM}$ of the present active material can be adjusted by changing the calcining temperature, changing the titanium oxide and niobium oxide raw materials, and changing the crushing and pulverizing conditions of the raw materials. However, the present invention is not limited to these adjustment methods.

The $D_{SEM}$ can be measured by the method described in Examples.

(Present Solid-State Electrolyte)

The present solid-state electrolyte is preferably a sulfide solid-state electrolyte containing a lithium (Li) element, a phosphorus (P) element, and a sulfur (S) element, and preferably has lithium ion conductivity.

The present solid-state electrolyte may be any of a crystalline material, glass ceramics, and glass.

The present solid-state electrolyte may be a compound having an argyrodite-type crystal structure, that is, a compound having a crystal phase with an argyrodite-type structure.

Examples of the sulfide solid-state electrolyte include $Li_2S$-$P_2S_5$, $Li_2S$-$P_2S_5$-LiHa ("Ha" represents one or more halogen elements), $Li_2S$-$P_2S_5$-$P_2O_5$, $Li_2S$-$Li_3PO_4$-$P_2S_5$, $Li_3PS_4$, $Li_4P_2S_6$, $Li_{10}GeP_2S_{12}$, $Li_{3.25}Ge_{0.25}P_{0.75}S_4$, $Li_7P_3S_{11}$, $Li_{3.25}P_{0.95}S_4$, and $Li_{7-x}PS_{6-x}Ha_x$ ("Ha" represents one or more halogen elements, and 0.2 < x < 2.0 or 0.2 < x < 1.8). Also, examples thereof include compositions having a Li-SiP-S-type crystal structure and compositions having a structural skeleton of $Li_7PS_6$ in which a part of P is replaced with Si, described in WO 2013/099834 and WO 2015/001818.

The present solid-state electrolyte is preferably in the form of powdery particles, and the particle diameter $D_{50}$ is preferably 0.1 $\mu$m or more and 10 $\mu$m or less.

The $D_{50}$ of the present solid-state electrolyte is preferably 0.1 $\mu$m or more, since no increase in resistance due to the increase in the surface of the solid-state electrolyte particles and no difficulty in mixing with the active material. Meanwhile, the $D_{50}$ of the present solid-state electrolyte is preferably 10 $\mu$m or less, since the present solid-state electrolyte can easily enter the gaps among the active materials, to increase the contact points and the contact areas.

From such a viewpoint, the $D_{50}$ of the present solid-state electrolyte is preferably 0.1 $\mu$m or more and 10 $\mu$m or less, more preferably 0.3 $\mu$m or more or 7 $\mu$m or less, and even more preferably 0.5 $\mu$m or more or 5 $\mu$m or less.

The $D_{50}$ of the present solid-state electrolyte can be measured by the method described in Examples.

The $D_{50}$ of the present solid-state electrolyte can be adjusted by changing the crushing and pulverizing conditions. However, the present invention is not limited to these adjustment methods.

The $D_{50}$ of the present solid-state electrolyte is preferably 1% or more and 100% or less of the $D_{50}$ of the positive electrode active material or the $D_{50}$ of the negative electrode active material.

The $D_{50}$ of the present solid-state electrolyte is preferably 1% or more of the $D_{50}$ of the positive electrode active material or the $D_{50}$ of the negative electrode active material, since the space among the active materials can be filled without gaps. Meanwhile, the $D_{50}$ of the present solid-state electrolyte is preferably 100% or less thereof, since the ratio of the active material in the electrode is increased to enhance the energy density of the battery.

From such a viewpoint, the $D_{50}$ of the present solid-state electrolyte is preferably 1% or more and 100% or less of the $D_{50}$ of the positive electrode active material or the $D_{50}$ of the negative electrode active material, more preferably 3% or more or 50% or less thereof, and even more preferably 5% or more or 30% or less thereof.

(Present Electrode Mixture)

As for the mixing ratio of the present active material and the present solid-state electrolyte in the present electrode mixture, it is preferable to mix the two such that the ratio (Nb/P) of the niobium (Nb) content (mol) of the present active material to the phosphorus (P) content (mol) of the solid-state electrolyte is 1 or more and 173 or less, from the viewpoint of ensuring good contact between the active material and the solid-state electrolyte interface.

The present electrode mixture may contain a binder, a conductive material, graphite as another electrode active material as needed, and other materials, in addition to the present active material and the present solid-state electrolyte.

The binder is not particularly limited as long as it is a material that can be used for electrodes. Examples thereof include polyimide, polyamide, and polyamide-imide. These may be used singly or in combination of two or more types of these. In addition, binders other than these may be further used in combination.

The details of the binder can be the same as those of known binders, and the descriptions are thus omitted here.

The content of the binder is preferably 1 part by mass or more and 25 parts by mass or less, and more preferably 2 parts by mass or more or 20 parts by mass or less, relative to 100 parts by mass of the present active material.

The conductive material is not particularly limited as long as it is a material that can be used for electrodes. Examples thereof include a fine metal powder and a conductive carbon material powder such as acetylene black. In the case of using a fine metal powder as the conductive material, it is preferable to use a fine powder of a metal having lithium ion conductivity, such as Sn, Zn, Ag, or In, or of an alloy of these metals.

In the case of blending a conductive material, the content of the conductive material is preferably 1 part by mass to 15 parts by mass, and more preferably 2 parts by mass or more or 10 parts by mass or less, relative to 100 parts by mass of the present active material.

As described above, by coexisting graphite as the electrode active material in the present electrode mixture, good cycle characteristics resulting from the graphite can be obtained.

In the case of blending graphite as the electrode active material, it is preferable to adjust the mixing mass ratio of the present active material and the graphite to be 50 : 50 to 95 to 5, especially 80 : 20 to 95 : 5.

(Form)

The form of the present electrode mixture is arbitrary. For example, it may be in the form of powder or in the form of pellets.

After mixing, for example, the present active material, the present solid-state electrolyte, and optionally other materials such as a binder, a conductive material, and another electrode active material, the mixture can be formed into pellets by press molding, for example, uniaxial press molding. However, the present invention is not limited to this.

<Present Electrode>

The present electrode mixture can be used to form a positive electrode or a negative electrode (referred to as "present electrode").

The present electrode can be formed by coating the present electrode mixture on, for example, an electrode current collector.

More specifically, the present active material (in particulate form), the present solid-state electrolyte, the binder, the conductive material, the solvent, and optionally other materials such as graphite are mixed to prepare the present electrode mixture. This present electrode mixture can be coated on the surface of a current collector made of Cu or the like and dried, and then pressed if necessary to form the present electrode. Alternatively, the present active material (in particulate form), the present solid-state electrolyte, the conductive material, and optionally other materials such as graphite can be mixed, press-molded, and then appropriately processed to produce the present electrode.

The drying process after coating the present electrode mixture on the surface of the current collector is preferably performed in a non-oxygen atmosphere, for example, in a nitrogen atmosphere or an argon atmosphere, for 1 hour to 10 hours, especially 1 hour to 7 hours.

<Present Solid-State Battery>

The present electrode can be used to constitute a solid-state battery (referred to as "present solid-state battery").

For example, the present solid-state battery having a positive electrode layer composed of a known electrode other than the present electrode, a negative electrode layer composed of the present electrode, and a solid-state electrolyte layer arranged between the positive electrode layer and the negative electrode layer can be constituted.

In addition, the present solid-state battery having a positive electrode layer composed of the present electrode, a negative electrode layer composed of a known electrode other than the present electrode, and a solid-state electrolyte layer arranged between the positive electrode layer and the negative electrode layer can be constituted.

The present solid-state battery is preferably, for example, a lithium solid-state battery. The lithium solid-state battery may be a primary battery or a secondary battery, but it is preferred to be used in a lithium secondary battery.

Here, the "solid-state battery" includes a solid-state battery containing no liquid substance or gel substance as the electrolyte, and also includes a solid-state battery containing a small amount, for example, 10% by mass or less of a liquid substance or gel substance as the electrolyte.

The solid-state electrolyte layer can be produced by dropping to form a coating film, for example, a slurry composed of a solid-state electrolyte, a binder, and a solvent on a substrate by a method such as a method of rubbing and cutting with a doctor blade or the like, a method of bringing the slurry in contact with the substrate and cutting with an air knife, or a screen printing method, and then removing the solvent through heating and drying. Alternatively, the solid-state electrolyte layer can be produced in such a manner that the solid-state electrolyte powder is formed into a pressed powder by pressing or the like, and then appropriately processed.

The counter electrode layer for the present electrode can be formed by using, for example, an electrode material used as an electrode active material of a lithium secondary battery.

When the counter electrode layer is a positive electrode layer, the electrode active material is not particularly limited as long as it functions as a positive electrode active material. For example, it may contain a lithium metal composite oxide. As the lithium metal composite oxide, a known lithium metal composite oxide can be used. As the metal in the lithium metal composite oxide, for example, both a transition element and a typical element can be used, and a transition element is preferably used. Examples of the lithium metal composite oxide include lithium transition metal oxides such as lithium cobaltate ($LiCoO_2$), lithium nickelate ($LiNiO_2$), lithium nickel cobalt manganate ($Li(Ni,Co,Mn)O_2$), lithium manganate ($LiMn_2O_4$), and lithium nickel-manganate ($LiNi_{0.5}Mn_{1.5}O_4$). The structure of these oxides is not particularly limited, and may be, for example, a layered rock salt-type compound or a spinel-type compound.

Meanwhile, when the counter electrode layer is a negative electrode layer, the electrode active material is not particularly limited as long as it functions as a negative electrode active material. Examples thereof include a lithium alloy such as indium lithium (InLi), graphite, and a silicon-based material. However, the present invention is not limited to these.

<Explanation of Terms and Phrases>

In the case of being expressed as the term "X to Y" (X and Y are arbitrary numbers) in the present description, unless otherwise stated, the term includes the meaning of "preferably more than X" or "preferably less than Y" along with the meaning "X or more and Y or less".

Further, in the case of being expressed as the term "X or more" (X is an arbitrary number) or the term "Y or less" (Y is an arbitrary number), the term also includes the intention of being "preferably more than X" or "preferably less than Y".

EXAMPLES

Hereinafter, the present invention will be further described based on Examples. However, the following Examples are not intended to limit the present invention.

<Example 1>

(Preparation of Active Material)

Titanium oxide powder (titanium oxide (IV), anatasetype) whose particle size was adjusted to 2 $\mu$m of $D_{50}$ and niobium pentoxide powder whose particle size was adjusted to 0.6 $\mu$m of $D_{50}$ were weighed so as to be a molar ratio of 1 : 1. As a pre-treatment for calcining, these were charged into a polypropylene container, an appropriate amount of ethanol was added thereto, and the raw materials were wet-crushed by ball milling for 3 hours using zirconia balls having a diameter of 10 mm with 10 times the weight of niobium pentoxide. Then, the zirconia balls were filtered out by filtration, the filtered and collected mixed raw material was dried at 60°C in a dryer, and the resulting dry powder was crushed in a mortar. The crushed dry powder was placed in an alumina crucible and heat-treated at 1,250°C for 24 hours in an air atmosphere using an electric furnace. This was allowed to cool naturally to less than 100°C, and then the collected calcined-powder was pulverized in a mortar. As a post-treatment for calcining, the calcined-powder was again charged into a polypropylene container, an appropriate amount of ethanol was added thereto, and these were wet-crushed by ball milling for 24 hours using zirconia balls having a diameter of 10 mm with 10 times the weight of niobium pentoxide. Then, the zirconia balls were filtered out by filtration, the filtered and collected calcined-powder was dried at 60°C in a dryer, and the resulting dry powder was crushed in a mortar to obtain a titanium niobium composite oxide as the active material.

The obtained titanium niobium composite oxide was analyzed by the X-ray diffraction method (XRD, Cu ray source), and as a result, it was identified as a single phase of $TiNb_2O_7$ having a monoclinic crystal structure. The specific surface area by the BET method, $D_{90}$, $D_{50}$, $D_{10}$, and $D_{SEM}$ were as listed in Table 1.

(Preparation of Solid-State Electrolyte)

A powdery sulfide compound having a compositional formula of $Li_{5.4}PS_{4.4}Cl_{0.8}Br_{0.8}$ was prepared as the solid-state electrolyte. The $D_{50}$ of the solid-state electrolyte was 0.8 $\mu$m.

The $D_{50}$ of the solid-state electrolyte was measured by the following procedure. Using an automatic sample supply machine for laser diffraction particle size distribution measuring apparatus ("Microtrac SDC", manufactured by Nikkiso Co., Ltd.), a slurry containing the solid-state electrolyte powder was fed into a non-aqueous solvent (toluene), and was irradiated with ultrasonic waves of 30 W for 60 seconds, at a flow rate set to 50%. Subsequently, the particle size distribution was measured using a laser diffraction particle size distribution measuring apparatus "MT3000II" manufactured by Nikkiso Co., Ltd., and the particle diameter with a cumulative volume of 50% was determined from the obtained volume-based particle size distribution chart and designated as $D_{50}$.

In addition, the solid-state electrolyte was analyzed by the X-ray diffraction method (XRD, Cu ray source) to obtain an X-ray diffraction pattern, and the peak intensity (cps) at each position was measured. The measurement was performed using an XRD apparatus "Smart Lab" manufactured by Rigaku Corporation in atmospheric non-exposure, under the conditions of a scanning axis of $2\theta/\theta$, a scanning range of 10° or more and 140° or less, a step width of 0.01°, and a scanning speed of 1°/min. The X-ray source was a $CuK\alpha1$ ray using a Johansson-type crystal, and the measurement was performed with a one-dimensional detector. The results are shown in FIG. 1.

(Production of Electrode Mixture)

The titanium niobium composite oxide serving as the active material, the sulfide compound serving as the solid-state electrolyte, both obtained as described above, and conductive agent (VGCF (registered trademark)) powder were mixed in a mortar in a mass ratio of 47.5 : 47.5 : 5 such that the ratio (Nb/P) of the niobium (Nb) content to the phosphorus (P) content was 44, thereby producing an electrode mixture.

<Example 2>

A titanium niobium composite oxide, a solid-state electrolyte, and an electrode mixture were obtained in the same manner as in Example 1 except that the calcining temperature at the time of preparing the titanium niobium composite oxide serving as the active material was changed to 1,150°C in Example 1.

<Example 3>

A titanium niobium composite oxide, a solid-state electrolyte, and an electrode mixture were obtained in the same manner as in Example 2 except that, in the preparation of the titanium niobium composite oxide serving as the active material in Example 2, the weight of the zirconia balls having a diameter of 10 mm used as the pre-treatment for calcining was changed to 20 times the weight of the niobium pentoxide.

<Example 4>

A titanium niobium composite oxide, a solid-state electrolyte, and an electrode mixture were obtained in the same manner as in Example 1 except that, in the preparation of the titanium niobium composite oxide serving as the active material in Example 1, the weight of the zirconia balls having a diameter of 10 mm used as the post-treatment for calcining was changed to 20 times the weight of the niobium pentoxide, and after filtering out the 10 mm zirconia balls, the ball milling was again performed using zirconia balls having a diameter of 2 mm with 20 times the weight of the niobium pentoxide.

<Example 5>

A titanium niobium composite oxide, a solid-state electrolyte, and an electrode mixture were obtained in the same manner as in Example 4 except that the calcining temperature at the time of preparing the titanium niobium composite oxide serving as the active material was changed to 1,150°C in Example 4.

The obtained titanium niobium composite oxide in each of Examples 2 to 5 was analyzed by the X-ray diffraction method (XRD, Cu ray source), and as a result, it was identified as a single phase of $TiNb_2O_7$ having a monoclinic crystal structure. The specific surface area by the BET method with $N_2$ adsorption, $D_{90}$, $D_{50}$, $D_{10}$, and $D_{SEM}$ were as listed in Table 1.

<Comparative Example 1>

A titanium niobium composite oxide, a solid-state electrolyte, and an electrode mixture were obtained in the same manner as in Example 1 except that the calcining temperature at the time of preparing the titanium niobium composite oxide serving as the active material was changed to 1,450°C in Example 1.

The obtained titanium niobium composite oxide was analyzed by the X-ray diffraction method (XRD, Cu ray source), and as a result, it was identified as a single phase of $TiNb_2O_7$ having a monoclinic crystal structure. The specific surface area by the BET method with $N_2$ adsorption was 0.80 $m^2/g$, the D50 was 8.12 $\mu m$, and the $D_{SEM}$ was 3.59 $\mu m$.

<Method for Measuring Various Physical Properties>

The various physical properties of the titanium niobium composite oxide (active material) obtained in each of Examples and Comparative Example were measured as follows.

($D_{SEM}$)

The titanium niobium composite oxide serving as the active material was observed at a magnification of 1,000 to 10,000 using an SEM (scanning electron microscope), and the captured image was analyzed using image analysis software (Image-Pro, ver. 10.0.3, Build 6912, manufactured by Nippon Roper K.K.) to determine the primary particle diameter of the selected particle. Here, the particle diameter refers to "diameter, average" in the measurement item name on the software, and this diameter means the diameter passing through the center of gravity of the particle. Then, the primary particles were selected and photographed in an arbitrary field of view, and a total of 200 or more primary particles were selected to determine the particle diameter ($D_{SEM}$).

($D_{90}$, $D_{50}$, and $D_{10}$)

As a pre-treatment, a titanium niobium composite oxide serving as the active material was mixed with water and dispersed by ultrasonic waves for 1 minute using an ultrasonic bath. Next, an ultrasonic probe was introduced into the ultrasound bath to irradiate with ultrasonic waves of 15 W (50 kHz) for 90 seconds.

Then, the $D_{90}$, $D_{50}$, and $D_{10}$ were measured using LS13 320 manufactured by Beckman Coulter, Inc. as a measuring apparatus. The measurement conditions were as follows: the solvent refractive index was 1.33, the particle permeability condition was permeation, the particle refractive index was 2.4, the shape was spherical form, the measurement range was 0.04 to 2,000 $\mu m$, and the average values from three measurements were designated as $D_{90}$, $D_{50}$, and $D_{10}$, respectively.

(BET Specific Surface Area)

First, 1.0 g of the sample (powder) was weighed in a glass cell (standard cell) for an automatic specific surface area analyzer, Macsorb (manufactured by Mountech Co., Ltd.), and was set in an auto sampler. The inside atmosphere of the glass cell was replaced with nitrogen gas, and the sample was then heat-treated at 250°C for 15 minutes in the nitrogen gas atmosphere. Thereafter, it was cooled for 4 minutes while allowing a mixed gas of nitrogen and helium to flow, and after cooling, the BET specific surface area of the sample was measured by the single-point BET method using a FlowSorb II 2300 manufactured by Shimadzu Corporation.

Here, as the adsorption gas during cooling and measurement, a mixed gas of 30 vol% of nitrogen and 70 vol% of helium was used.

<Evaluation of Solid-State Battery Characteristics>

(Production of Battery)

The electrode mixture obtained in each of Examples and Comparative Example was used to produce an all-solid-state battery.

Here, an InLi foil was used as the counter electrode, and a powder represented by the compositional formula of $Li_{5.4}PS_{4.4}Cl_{0.8}Br_{0.8}$ was used as the solid-state electrolyte.

The lower opening of a ceramic cylinder (opening diameter of 10 mm) with upper and lower openings was closed with an electrode (made of SUS), 0.10 g of the solid-state electrolyte was charged therein, the upper opening was closed with another electrode to sandwich the solid-state electrolyte, and the resulting product was uniaxially press-molded at 10 MPa to prepare an electrolyte layer.

The upper electrode was once detached, the electrode mixture obtained in each of Examples and Comparative Example was inserted therein, the upper electrode was reattached, and the resulting product was uniaxially press-molded at 42 MPa to press-bond the positive electrode (electrode mixture) and the electrolyte layer. Next, the lower electrode was once detached, the InLi foil was inserted therein, the lower electrode was reattached, and the upper and lower electrodes were screwed in four places with a torque pressure of 6 N·m, thereby producing an all-solid-state battery having a capacity equivalent to 1.2 mAh. Here, the all-solid-state battery cell was produced in a glove box replaced with dry argon having an average dew point of -60°C.

(Evaluation of Charge Capacity and Discharge Capacity)

For the capacity check in the battery characteristic evaluation, the all-solid-state battery in each of Examples and Comparative Example was placed in an environmental test chamber maintained at 25°C and connected to a charge-discharge measurement apparatus for evaluation.

Since the cell capacity was 1.2 mAh, 1 C corresponded to 1.2 mA. For the charging and discharging of the battery, the battery was charged to 0.38 V at 0.1 C by the CC-CV mode (charging ended when the current value reached 0.01 C) to obtain the initial charge capacity ("charge capacity" in the table).

The battery was discharged to 2.38 V at 0.1 C by the CC mode to obtain the initial discharge capacity ("discharge capacity" in the table).

(Evaluation of Charge-Discharge Efficiency)

The charge-discharge efficiency was obtained by introducing the initial discharge capacity and the initial charge capacity obtained in the previous section into the following formula.

```
Charge-discharge efficiency (%) = (initial discharge
capacity / initial charge capacity) × 100
```

[Table 1]

| | Physical properties of titanium niobium composite oxide | | | | | | | | Battery evaluations | | |
|---|---|---|---|---|---|---|---|---|---|---|---|
| | $D_{SEM}$ [μm] | $D_{10}$ [μm] | $D_{50}$ [μm] | $D_{90}$ [μm] | BET [m²/g] | $D_{50}$ / BET | $(D_{90}-D_{10})$ / $D_{50}$ | $D_{50}$ / $D_{SEM}$ | Charge capacity [mAh/g] | Discharge capacity [mAh/g] | Charge-discharge efficiency [%] |
| Example 1 | 1.45 | 2.17 | 3.85 | 6.44 | 1.99 | 1.93 | 1.11 | 2.66 | 267 | 243 | 91 |
| Example 2 | 1.87 | 0.96 | 1.92 | 2.98 | 3.55 | 0.54 | 1.05 | 1.03 | 273 | 255 | 93 |
| Example 3 | 2.08 | 1.78 | 3.35 | 6.38 | 1.37 | 2.45 | 1.37 | 1.61 | 271 | 254 | 94 |
| Example 4 | 0.38 | 0.65 | 1.17 | 2.00 | 6.20 | 0.19 | 1.15 | 3.08 | 262 | 208 | 79 |
| Example 5 | 0.32 | 0.45 | 0.99 | 1.91 | 10.72 | 0.09 | 1.47 | 3.09 | 283 | 228 | 81 |
| Comparative Example 1 | 3.59 | 2.46 | 8.12 | 16.9 | 0.80 | 10.15 | 1.78 | 2.26 | 202 | 154 | 76 |

EP 4 030 503 A1

(Consideration)

From the results of Examples and Comparative Example, as well as the results of tests that have been so far conducted by the present inventors, it is found that, when constituting an electrode mixture by using a titanium niobium composite oxide having a ratio ($D_{50}$ ($\mu$m) / BET ($m^2$/g)) of 0.005 or more and 5.0 or less as the active material and using a sulfide solid-state electrolyte containing a lithium (Li) element, a phosphorus (P) element, and a sulfur (S) element as the solid-state electrolyte, and when constituting a solid-state battery by using the electrode mixture, the battery not only functions as a solid-state battery, but also has excellent charge-discharge efficiency.

**Claims**

1.  An electrode mixture, comprising: a sulfide solid-state electrolyte containing a lithium (Li) element, a phosphorus (P) element, and a sulfur (S) element; and an active material,

    wherein the active material is represented by general formula $Ti_{1\pm\alpha}Nb_{2\pm\beta}O_{7\pm\gamma}$ (wherein $0 \leq \alpha < 1$, $0 \leq \beta < 2$, and $0 \leq \gamma < 0.3$), and
    the active material has a ratio of a particle diameter $D_{50}$ to a BET specific surface area (BET) , ($D_{50}$ ($\mu$m) / BET ($m^2$/g)) of 0.005 or more and 5.0 or less, wherein the particle diameter $D_{50}$ is a 50% volume cumulative particle diameter based on the volume-based particle size distribution obtained by measuring with a laser diffraction scattering-type particle size distribution measurement method and the BET specific surface area is analyzed from the gas absorption isotherm curve on the basis of multimolecular layer adsorption theory.

2.  The electrode mixture according to claim 1, wherein the active material has a particle diameter $D_{50}$ of 0.1 $\mu$m or more and 8.0 $\mu$m or less.

3.  The electrode mixture according to claim 1 or 2, wherein the active material has a BET specific surface area of 1.0 $m^2$/g or more and 20 $m^2$/g or less.

4.  The electrode mixture according to any one of claims 1 to 3, wherein the active material has a relationship among the particle diameter $D_{50}$, a particle diameter $D_{90}$ and a particle diameter $D_{10}$, the relationship satisfying

    $$(D_{90}\ (\mu m)\ -\ D_{10}\ (\mu m))\ /\ D_{50}\ (\mu m)\ =\ 0.8\ to\ 1.5.$$

    wherein the particle diameter $D_{90}$ is a 90% volume cumulative particle diameter and the particle diameter $D_{10}$ is a 10% volume cumulative particle diameter, based on the volume-based particle size distribution obtained by measuring with a laser diffraction scattering-type particle size distribution measurement method.

5.  The electrode mixture according to any one of claims 1 to 4, wherein the active material has a ratio of the particle diameter $D_{50}$ to an average particle diameter $D_{SEM}$, ($D_{50}$ ($\mu$m) / $D_{SEM}$ ($\mu$m)), of 1.0 or more and 3.5 or less, wherein the average particle diameter $D_{SEM}$ is calculated by software analysis of particles in a scanning electron microscope image.

6.  The electrode mixture according to any one of claims 1 to 5, wherein the active material has an average particle diameter $D_{SEM}$, as calculated by software analysis of particles in a scanning electron microscope image, of 0.1 $\mu$m or more and 3.0 $\mu$m or less.

7.  The electrode mixture according to any one of claims 1 to 6, wherein the sulfide solid-state electrolyte comprises a compound having an argyrodite-type crystal structure.

8.  An electrode layer, comprising the electrode mixture according to any one of claims 1 to 7.

9.  A solid-state battery, having a positive electrode layer, a negative electrode layer, and a solid-state electrolyte layer arranged between the positive electrode layer and the negative electrode layer,
    wherein the positive electrode layer or the negative electrode layer comprises the electrode mixture according to any one of claims 1 to 7.

[FIG. 1]

## INTERNATIONAL SEARCH REPORT

| International application No. |
| --- |
| PCT/JP2020/034625 |

**A. CLASSIFICATION OF SUBJECT MATTER**
H01M 4/131(2010.01)i; H01M 4/485(2010.01)i; H01M 10/052(2010.01)i; H01M 10/0562(2010.01)i
FI: H01M4/131; H01M4/485; H01M10/052; H01M10/0562

According to International Patent Classification (IPC) or to both national classification and IPC

**B. FIELDS SEARCHED**

Minimum documentation searched (classification system followed by classification symbols)
H01M4/131; H01M4/485; H01M10/052; H01M10/0562

Documentation searched other than minimum documentation to the extent that such documents are included in the fields searched

| | |
| --- | --- |
| Published examined utility model applications of Japan | 1922–1996 |
| Published unexamined utility model applications of Japan | 1971–2020 |
| Registered utility model specifications of Japan | 1996–2020 |
| Published registered utility model applications of Japan | 1994–2020 |

Electronic data base consulted during the international search (name of data base and, where practicable, search terms used)
JSTPlus (JDreamIII)

**C. DOCUMENTS CONSIDERED TO BE RELEVANT**

| Category* | Citation of document, with indication, where appropriate, of the relevant passages | Relevant to claim No. |
| --- | --- | --- |
| Y | WO 2013/140565 A1 (TOSHIBA CORP.) 26 September 2013 (2013-09-26) paragraphs [0030]-[0034], [0047], [0059]-[0064] | 1-9 |
| Y | JP 2014-209442 A (TOSHIBA CORP.) 06 November 2014 (2014-11-06) paragraphs [0106]-[0107], tables 3-4 | 1-9 |
| Y | WO 2018/092366 A1 (IDEMITSU KOSAN CO., LTD.) 24 May 2018 (2018-05-24) paragraphs [0004]-[0005], [0056]-[0058] | 7-9 |

☐ Further documents are listed in the continuation of Box C.   ☒ See patent family annex.

| | |
| --- | --- |
| * Special categories of cited documents: | "T" later document published after the international filing date or priority date and not in conflict with the application but cited to understand the principle or theory underlying the invention |
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
| --- | --- |
| 16 November 2020 (16.11.2020) | 24 November 2020 (24.11.2020) |

| Name and mailing address of the ISA/ | Authorized officer |
| --- | --- |
| Japan Patent Office<br>3-4-3, Kasumigaseki, Chiyoda-ku,<br>Tokyo 100-8915, Japan | |
| | Telephone No. |

Form PCT/ISA/210 (second sheet) (January 2015)

International application No.

PCT/JP2020/034625

| Patent Documents referred in the Report | Publication Date | Patent Family | Publication Date |
|---|---|---|---|
| WO 2013/140565 A1 | 26 Sep. 2013 | US 2014/0193689 A1 paragraphs [0034]-[0038], [0052], [0065]-[0070] | |
| JP 2014-209442 A | 06 Nov. 2014 | US 2014/0295282 A1 paragraphs [0123]-[0124], tables 3-4 EP 2784857 A1 CN 104078665 A KR 10-2014-0117272 A | |
| WO 2018/092366 A1 | 24 May 2018 | US 2019/0319305 A1 paragraphs [0004]-[0005], [0102]-[0103] EP 3544108 A1 CN 109937507 A KR 10-2019-0082794 A | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2010287496 A
- JP 2015088467 A
- JP 2016219355 A
- WO 2013099834 A
- WO 2015001818 A